(19) Europäisches Patentamt
European Patent Office
Office européen des brevets

(11) **EP 4 429 157 A1**

(12) **EUROPEAN PATENT APPLICATION**
published in accordance with Art. 153(4) EPC

(43) Date of publication:
**11.09.2024  Bulletin 2024/37**

(21) Application number: **22897730.2**

(22) Date of filing: **18.11.2022**

(51) International Patent Classification (IPC):
**H04L 5/00** (2006.01)

(52) Cooperative Patent Classification (CPC):
**H04L 5/00; H04W 16/28**

(86) International application number:
**PCT/CN2022/132948**

(87) International publication number:
**WO 2023/093647 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.11.2021  CN 202111393305**

(71) Applicant: **Huawei Technologies Co., Ltd.
Shenzhen, Guangdong 518129 (CN)**

(72) Inventors:
• **LI, Shengyu
  Shenzhen, Guangdong 518129 (CN)**
• **GUAN, Lei
  Shenzhen, Guangdong 518129 (CN)**
• **LI, Ruijie
  Shenzhen, Guangdong 518129 (CN)**

(74) Representative: **Grünecker Patent- und
Rechtsanwälte
PartG mbB
Leopoldstraße 4
80802 München (DE)**

(54) **INITIAL ACCESS METHOD AND APPARATUS**

(57)    Embodiments of this application provide an initial access method and an apparatus. In the method, an SSB for space division multiplexing is introduced, that is, a plurality of SSB beams are simultaneously sent on a same time-frequency resource, so that time domain overheads of the SSB are reduced without reducing resolution of the SSB beam.

FIG. 5

## Description

This application claims priority to Chinese Patent Application No. 202111393305.X, filed with the China National Intellectual Property Administration on November 23, 2021 and entitled "INITIAL ACCESS METHOD AND APPARATUS", which is incorporated herein by reference in its entirety.

## TECHNICAL FIELD

Embodiments of this application relate to the wireless communication field, and in particular, to an initial access method and an apparatus.

## BACKGROUND

In a cellular communication system, even if a cell does not establish a wireless connection to any user equipment (user equipment, UE), and does not need to perform data transmission, a base station that manages the cell still needs to send some common signals. These common signals are mainly used by the UE to perform a cell search, initial access, and mobility related measurement. In a new radio (new radio, NR) system of a 5th generation (5th generation, 5G) mobile communication system, these common signals include a primary synchronization signal (primary synchronization signal, PSS), a secondary synchronization signal (secondary synchronization signal, SSS), a physical broadcast channel (physical broadcast channel, PBCH), a multicast channel that carries system information (system information, SI), and a multicast channel that carries a paging message. A combination of the PSS, the SSS, and the PBCH is referred to as a synchronization signal and PBCH block (synchronization signal and PBCH block, SSB). The SSB is periodically sent, and beam scanning needs to be performed, so that all UEs in a cell can receive the SSB. Similarly, the multicast channel that carries the SI and the multicast channel that carries the paging message also need to be periodically sent, and beam scanning needs to be performed. These downlink common signals have a very large proportion in time domain. For example, in a scenario in which a network is deployed on a millimeter-wave band in a frequency range 2 (frequency range 2, FR 2), a corresponding frequency range is 24,250 MHz to 52,600 MHz, a quantity of beams of the SSB is up to 64, and a symbol proportion is up to 15%. Due to these limitations, time domain shutdown and sleep cannot be performed at a higher proportion on a transmit link of the base station. Consequently, energy consumption of the base station is very high even when the base station is unloaded.

## SUMMARY

Embodiments of this application provide an initial access method and a communication apparatus, to reduce time domain resource overheads of an SSB.

According to a first aspect, an embodiment of this application provides an initial access method. The method includes: A base station sends M first common channels to UE. The first common channels include a synchronization signal and a physical broadcast channel, the physical broadcast channel carries partial MSI of a cell, the partial MSI indicates a transmission configuration of RMSI of the cell, and time-frequency resources of the M first common channels are completely the same. The UE detects the M first common channels, and determines a detected target first common channel. The base station sends M second common channels in one-to-one correspondence with the M first common channels to the UE. A spatial filtering parameter used to send the M second common channels is the same as a spatial filtering parameter used to send the M first common channels. The UE receives a target second common channel corresponding to the target first common channel based on the target spatial filtering parameter. The target second common channel carries the RMSI, and the target spatial filtering parameter is a spatial filtering parameter used when the target first common channel is received. The UE sends a target PRACH based on the target spatial filtering parameter. The base station receives M groups of physical random access channels PRACHs in one-to-one correspondence with the M first common channels. A spatial filtering parameter used to receive an $m^{th}$ group of PRACHs in the M groups of PRACHs is the same as a spatial filtering parameter used to send an $m^{th}$ first common channel in the M first common channels. Herein, M is an integer greater than 1, and m is a positive integer less than or equal to M.

In the method, an SSB transmission method in which space division multiplexing is performed is introduced, that is, a plurality of SSB beams are simultaneously sent on a same time-frequency resource, so that time domain overheads of an SSB are reduced without reducing resolution of the SSB beam.

In a possible implementation, first information of the first common channel indicates a first index, and values of first indexes indicated by different first common channels in the M first common channels are different.

In a possible implementation, the UE determines a target first index corresponding to the target first common channel based on first information of the target first common channel. The values of the first indexes indicated by different first common channels in the M first common channels are different.

In the foregoing implementation, the base station may use the first information to indicate different SSBs in M SSBs, so that the UE learns of a specific SSB in the M SSBs that is a detected SSB.

In a possible implementation, the first information is at least one of the following: information related to a DMRS of the first common channel; an index field on the first common channel; and a parameter in a channel coding, modulation, or scrambling processing process of the first common channel.

In a possible implementation, the information related to the DMRS is one of the following: a sequence index of the DMRS, an initialization identifier value of a DMRS sequence, an index of a resource element position of the DMRS, or an index of an orthogonal cover code of the DMRS.

In a possible implementation, the index field indicates a target first common channel in the M first common channels.

In a possible implementation, the parameter in the channel coding, modulation, or scrambling processing process of the first common channel is an index of a scrambling sequence of the first common channel or an initialization value of a scrambling sequence of the first common channel.

In a possible implementation, a frequency domain resource of the first common channel is 20 x M RBs.

In a possible implementation, time-frequency resources of the M second common channels are the same. Transmission efficiency of the second common channel can be improved by introducing the second common channel for space division multiplexing.

In a possible implementation, each of the M groups of PRACHs includes L PRACHs, and time-frequency resources of $k^{th}$ PRACHs in all of the M groups of PRACHs are the same. Herein, L is a positive integer, and k is a positive integer less than or equal to L.

In a possible implementation, the base station sends M groups of paging channels in one-to-one correspondence with the M first common channels. A spatial filtering parameter used to send an $m^{th}$ group of paging channels in the M groups of paging channels is the same as the spatial filtering parameter used to send the $m^{th}$ first common channel in the M first common channels. Herein, m is a positive integer less than or equal to M. Each of the M groups of paging channels includes a maximum of S paging channels.

In a possible implementation, the UE receives a target paging channel based on the target spatial filtering parameter.

In a possible implementation, the M first common channels are in one-to-one correspondence with the M groups of paging channels, a group of paging channels corresponding to the target first common channel includes the target paging channel, each of the M groups of paging channels includes S paging channels, and time-frequency resources of $s^{th}$ paging channels in all of the M groups of paging channels are the same. Herein, s is a positive integer less than or equal to S.

In the foregoing implementation, space division multiplexing of the paging channel is introduced, to improve transmission efficiency of the paging channel.

According to a second aspect, an embodiment of this application provides a communication apparatus. The apparatus may be a terminal, or may be a chip used in the terminal. The apparatus has a function of implementing UE in any implementation of the first aspect. The function may be implemented by hardware, or may be implemented by hardware executing corresponding software. The hardware or the software includes one or more modules corresponding to the function.

According to a third aspect, an embodiment of this application provides a communication apparatus. The apparatus may be a network device, or may be a chip used in the network device. The apparatus has a function of implementing a base station in any implementation of the first aspect. The function may be implemented by hardware, or may be implemented by hardware executing corresponding software. The hardware or the software includes one or more modules corresponding to the function.

According to a fourth aspect, an embodiment of this application provides a communication apparatus, including a processor and a memory. The memory is configured to store computer instructions. When the apparatus runs, the processor executes the computer instructions stored in the memory, so that the apparatus performs the method in any implementation of the first aspect.

According to a fifth aspect, an embodiment of this application provides a communication apparatus, including a processor and an interface circuit. The processor is configured to communicate with another apparatus through the interface circuit, and perform the method in any implementation of the first aspect. There are one or more processors.

According to a sixth aspect, an embodiment of this application further provides a computer-readable storage medium. The computer-readable storage medium stores instructions, and when the instructions run on a communication apparatus, the communication apparatus is enabled to perform the method in any implementation of the first aspect.

According to a seventh aspect, an embodiment of this application further provides a computer program product. The computer program product includes a computer program. When the computer program is run by a communication apparatus, the communication apparatus is enabled to perform the method in any implementation of the first aspect.

According to an eighth aspect, an embodiment of this application further provides a chip system, including a processor, configured to perform the method in any implementation of the first aspect.

## BRIEF DESCRIPTION OF DRAWINGS

FIG. 1 is a diagram of an architecture of a mobile communication system according to an embodiment of this application;
FIG. 2 is a diagram of a time-frequency structure of an SSB according to an embodiment of this application;

FIG. 3 is a diagram in which four digital paths form four beams for time division multiplexing according to an embodiment of this application;

FIG. 4 is a diagram in which a base station implements four beams for space division multiplexing by using four digital paths according to an embodiment of this application;

FIG. 5 is a schematic flowchart of an initial access method according to an embodiment of this application;

FIG. 6 is a diagram of a communication apparatus according to an embodiment of this application; and

FIG. 7 is a diagram of another communication apparatus according to an embodiment of this application.

## DESCRIPTION OF EMBODIMENTS

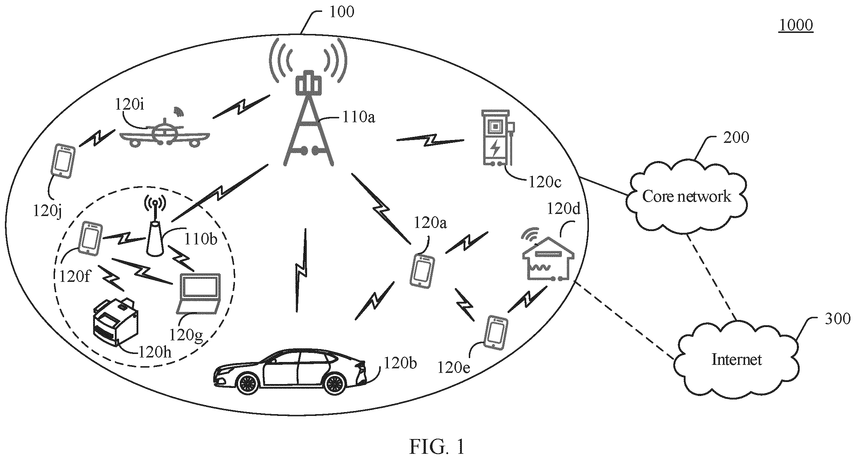

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or a function of the core network device and a logical function of the radio access network device may be integrated into a same physical device, or some functions of the core network device and some functions of the radio access network device may be integrated into one physical device. A wired or wireless manner may be used for a connection between terminals and a connection between radio access network devices. FIG. 1 is only a diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in this embodiment of this application. For ease of description, the following provides descriptions by using an example in which a base station serves as the radio access network device.

The terminal may also be referred to as a terminal device, UE, a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self-driving, telemedicine, smart grid, smart furniture, smart office, smart wearable, smart transportation, and smart city. The terminal may be a mobile phone, a tablet, or a computer, a wearable device, a vehicle, an unmanned aerial vehicle, a helicopter, an airplane, a ship, a robot, a mechanical arm, a smart home device, or the like that has a wireless transceiver function. A specific technology and a specific device form used by the terminal are not limited in this embodiment of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in this embodiment of this application.

Roles of the base station and the terminal may be relative. For example, a helicopter or an unmanned aerial vehicle 120i in FIG. 1 may be configured as a mobile base station, and for a terminal 120j accessing the radio access network 100 through 120i, a terminal 120i is a base station. However, for a base station 110a, 120i is a terminal. In other words, communication between 110a and 120i is performed based on a wireless air interface protocol. Certainly, 110a and 120i may alternatively communicate with each other based on an interface protocol between base stations. In this case, for 110a, 120i is also a base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between the base station and the terminal, between the base stations, and between the terminals may be performed based on a licensed spectrum, or may be performed based on an unlicensed spectrum, or may be performed based on both the licensed spectrum and the unlicensed spectrum. Communication may be performed based on a spectrum below 6 gigahertz (gigahertz, GHz), or may be performed based on a spectrum above 6 GHz, or may be performed based on both the spectrum below 6 GHz and the spectrum above 6 GHz. A spectrum resource used for wireless communication is not limited in this embodiment of this application.

In this embodiment of this application, the base station function may be performed by a module (for example, a chip) in the base station, or may be performed by a control subsystem including the base station function. The control subsystem that includes the base station function herein may be a control center in the foregoing application scenarios such as smart grid, industrial control, intelligent transportation, and smart city. The terminal function may be performed by a module (for example, a chip or a modem) in the terminal, or may be performed by an apparatus including the terminal function.

In this embodiment of this application, the base station sends a downlink signal or downlink information to the terminal. The downlink information is carried on a downlink channel. The terminal sends an uplink signal or uplink information to the base station. The uplink information is carried on an uplink channel. To communicate with the base station, the terminal needs to establish a wireless connection to a cell controlled by the base station. The cell that establishes a wireless connection to the terminal is referred to as a serving cell of the terminal. When communicating with the serving cell, the terminal is further interfered by a signal from a neighboring cell.

In this embodiment of this application, transmission of a signal or information may include a sending action of a transmit end and a receiving action of a receive end.

In this embodiment of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in this embodiment of this application are time domain symbols.

It may be understood that, in this embodiment of this application, a physical downlink shared channel (physical downlink shared channel, PDSCH), a physical downlink control channel (physical downlink control channel, PDCCH), a physical uplink shared channel (physical uplink shared channel, PUSCH), and a PBCH are merely examples of a downlink data channel, a downlink control channel, an uplink data channel, and a broadcast channel at a physical layer. In different systems and different scenarios, these channels may have different names. This is not limited in this embodiment of this application. Sending a channel A may also be understood as sending information on the channel A, and receiving a channel B may also be understood as receiving information on the channel B.

Before embodiments of this application are described, a procedure in which UE initially accesses a cell in an NR system is first described. A process in which the UE in an idle mode accesses the cell and is switched to a connected mode mainly includes the following loops: SSB detection, receiving of a system information block 1 (system information block 1, SIB 1), paging, and random access (random access, RA).

1. SSB detection

The UE detects an SSB, and may obtain a cell identifier, complete downlink timing synchronization, and obtain a master information block (master information block, MIB). The MIB includes a configuration parameter of a PDCCH used to schedule the SIB 1. A PSS and an SSS may carry a physical cell identifier (physical cell identifier, PCI), and the UE detects the PSS and SSS, to obtain the PCI. A PBCH of the SSB carries the MIB, and the PBCH further indicates an SSB index (index). Each SSB index corresponds to a sending position. The UE completes downlink timing synchronization based on the detected SSB index and a detection moment.

The UE can further complete training of a transmit beam on a base station side by detecting the SSB. Because a width of a beam for sending the SSB is wider than a width of a beam used for communication after a radio resource control (radio resource control, RRC) connection is established with the UE, a transmit beam of the SSB herein may also be referred to as a wide beam. In NR, sending of the SSB complies with an SSB pattern (pattern), and the SSB pattern includes at least one SSB. Different SSBs in the SSB pattern correspond to different SSB indexes, and different SSB indexes correspond to different time-frequency positions, in other words, may correspond to different time domain positions and a same frequency domain position, or may correspond to different frequency domain positions and a same time domain position, or may correspond to different time domain positions and different frequency domain positions. Optionally, different SSB indexes correspond to different transmit spatial filtering parameters at a base station end, or correspond to different transmit beams. The SSB index may be carried in the PBCH of the SSB. The UE may detect the SSB, to select an SSB with a strongest received signal, and determine a corresponding SSB index, so as to complete training performed by the UE on a transmit beam of a base station.

Optionally, the UE may receive same SSB indexes in a plurality of SSB patterns through different receive beams, to determine a better receive beam on a UE side, and complete training of the receive beam on the UE side. A function of the wide beam of the base station includes: (1) The UE receives, at a time-frequency position corresponding to the SSB index, the SIB 1 and a paging message (SIB 1/paging for short) that are sent through a same beam, to improve coverage of the SIB 1/paging. (2) The UE sends a physical random access channel (physical random access channel, PRACH) at a position corresponding to the SSB index, and the base station may receive the physical random access channel through a wide beam corresponding to the SSB index, to improve a PRACH receiving success probability. (3) After the UE completes initial access and establishes the RRC connection, the base station may perform narrow beam training based on the wide beam, in other words, train only a narrow beam within a range of the wide beam, to reduce narrow beam training overheads.

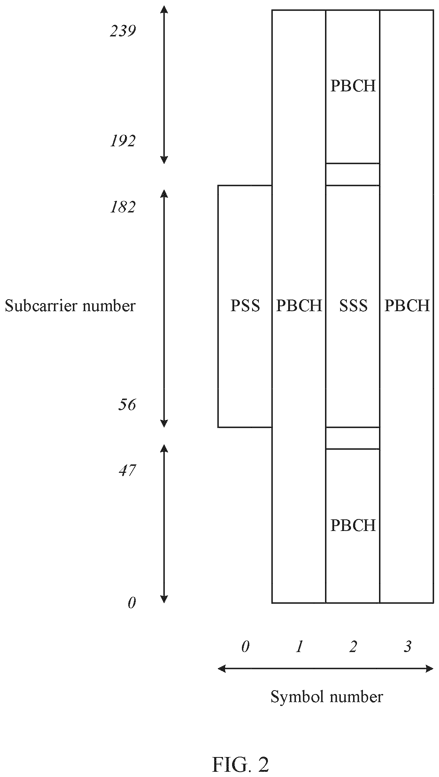

A time-frequency structure of the SSB is shown in FIG. 2. One SSB occupies four consecutive symbols in time domain, and occupies 20 resource blocks (resource block, RB) in frequency domain, namely, 240 subcarriers.

In embodiments of this application, the spatial filtering parameter may be a spatial filtering parameter at a receive end, including a combination matrix or a processing matrix that is used to receive a signal on a plurality of receive antennas or receive paths at the receive end, specifically, for example, an equalization matrix or a combination matrix in a digital domain, or a receive beam in an analog domain; or may be a spatial filtering parameter at the transmit end, including a beamforming (beamforming) matrix or a processing matrix that is used to send a signal on a plurality of transmit antennas or transmit paths at the transmit end, for example, a precoding matrix or a beamforming matrix in the digital domain, or a transmit beam in the analog domain. That spatial filtering parameters are the same may also mean that a spatial filtering parameter used when a signal A is sent is the same as a spatial filtering parameter used when a signal B is received. The receive beam and the transmit beam are sometimes briefly referred to as a beam. In this application, for brevity, descriptions are provided by using an example in which the spatial filtering parameter is a beam.

2. Receiving of a SIB 1

UE obtains a MIB through SSB detection. The MIB indicates a candidate time-frequency position used to receive a PDCCH for scheduling the SIB 1. The UE blindly detects the PDCCH at the candidate time-frequency position. If the PDCCH is detected, the UE may receive, in a specified manner, a PDSCH on a time-frequency resource indicated by downlink control information (downlink control information, DCI) on the PDCCH, to obtain the SIB 1 carried on the PDSCH. The SIB 1 includes a large amount of information, but a main function is to complete a configuration of a primary cell (primary cell, PCell), so that UE in an idle mode listens to a paging message; or is to complete uplink timing synchronization through random access, so that the UE is switched to a connected mode.

One SSB index is associated with one SIB 1 occasion (occasion). For example, if an SSB index #1 is associated with a SIB 1 occasion #1, a base station sends, on the SIB 1 occasion #1, the SIB 1 or sends the PDCCH for scheduling the SIB 1. A used transmit beam is the same as a transmit beam used by the base station to send the SSB index #1. Correspondingly, the UE receives, on the SIB 1 occasion #1, the SIB 1 or receives/detects the PDCCH for scheduling the SIB 1. A used receive beam is the same as a receive beam used to receive the SSB index #1.

(3) Paging

Similar to a SIB 1, UE in an idle mode needs to listen to a paging (paging) message. Specifically, after receiving the SIB 1, the UE obtains configuration information of the paging message, including configuration information of a paging frame and a paging occasion (paging occasion). After determining the paging occasion, the UE further determines a plurality of monitoring occasions (monitoring occasion), namely, a monitoring occasion set (set). Each monitoring occasion is a DCI blind detection occasion. One SSB index is associated with a group of monitoring occasions (namely, a monitoring occasion subset) in one monitoring occasion set, and different SSB indexes are associated with different monitoring occasions. If an SSB index #1 is associated with a monitoring occasion subset #1, a transmit beam used when a base station sends, on the monitoring occasion subset #1, a PDCCH for scheduling the paging message is the same as a transmit beam used when the base station sends the SSB index #1, and a receive beam used when the UE receives/detects, on the monitoring occasion subset #1, the PDCCH for scheduling the paging message is the same as a receive beam used when the UE receives the SSB index #1.

(4) Random access

In NR, four-step RA and two-step RA are defined. The following provides an example of four-step RA.
Step 1: UE sends a PRACH to a base station, where the PRACH is also referred to as a message 1 (message 1, Msg1).
The UE first selects, based on a reference signal received power (reference signal received power, RSRP) of an SSB, an SSB whose RSRP is greater than a threshold configured by using higher layer signaling, and determines a selectable RACH occasion (occasion) and preamble (preamble) index set based on an association relationship between the SSB and a random access channel (random access channel, RACH). The UE sends Msg1 based on a spatial filtering parameter used when the SSB is received. The association relationship between the SSB and the RACH, and a time domain resource and a frequency domain resource of the PRACH are both indicated by using a SIB 1. The time domain resource of the PRACH is repeated by using a slot as a cycle, and each slot has one or more RACH occasions.

Step 2: The base station sends a random access response (random access response, RAR) to the UE, where the RAR is also referred to as Msg2.

After sending Msg1, the UE detects, within a specified time domain window, DCI scrambled by using a random access-radio network temporary identifier (radio network temporary identifier, RNTI). A value of the RA-RNTI is related to a time-frequency position at which the UE sends the PRACH. In other words, the base station may implicitly notify, by using different values of the RA-RNTI, the UE of whether the DCI scrambled by using the RA-RNTI currently is for the UE. If the UE detects the DCI scrambled by using the RA-RNTI corresponding to the UE, the UE receives a PDSCH scheduled by using the DCI. A MAC protocol data unit (protocol data unit, PDU) carried on the PDSCH carries a plurality of subPDUs (subPDU). Each subPDU indicates one preamble index, and includes one MAC RAR. The MAC RAR includes uplink scheduling information of UE that sends the preamble index.

The RAR has three functions: A function 1 is sending an initial uplink transmission timing advance (timing advance, TA) to help the UE complete uplink timing synchronization. A function 2 is sending a temporary cell-radio network temporary identifier (temporary cell-RNTI, TC-RNTI). A function 3 is sending uplink scheduling information to schedule a PUSCH.

Step 3: The UE sends Msg3 to the base station.

If the UE receives the RAR, the UE sends Msg3 on the scheduled PUSCH based on a TA indicated by the RAR. Data carried on the PUSCH is scrambled by using the TC-RNTI at a physical layer, and the data carried on the PUSCH includes an identifier (identifier, ID) of the UE.

Step 4: The base station sends Msg4 to the UE.

After sending Msg3, the UE detects, in a corresponding time window, DCI scrambled by using the TC-RNTI. If the DCI is detected, the UE receives a corresponding PDSCH. The PDSCH includes a contention resolution identifier (contention resolution identifier). If the identifier matches the ID of the UE, it indicates that random access contention resolution succeeds, and the UE changes the TC-RNTI to a cell-radio network temporary identifier (C-RNTI). Therefore, a RA procedure of the UE is completed.

Currently, a time domain width of one SSB is four symbols, and one slot (including 14 symbols) includes only two SSBs. Therefore, for one slot including 14 symbols, six symbols are still idle. In a high-frequency deployment scenario, for example, the foregoing scenario in which deployment is performed on a frequency band in an FR 2, the SSB is usually sent by using a wide beam, and data is usually sent by using a narrow beam. Therefore, a slot in which the SSB is located cannot be used for data transmission. Slot-level time domain resource overheads caused by the SSB are up to 25%. Even if no data transmission is performed in a cell, the SSB still needs to be transmitted, to ensure basic common channel coverage. Consequently, a base station cannot shut down consecutive symbols, leading to a very high power consumption. For a millimeter wave, limited by a current device process, power consumption of the base station is mainly related to a duty cycle (namely, time domain overheads) of a transmit signal in time domain, and is not closely related to a size of a frequency domain resource of the transmit signal.

Clearly, an SSB coverage enhancement requirement of the millimeter wave is contradictory to a requirement for low time domain overheads. To improve coverage, more and narrower beams need to be used. However, due to an implementation constraint, different analog beams can be transmitted only on different time domain symbols. Therefore, time domain overheads are inevitably increased, and greater energy consumption of the base station is caused.

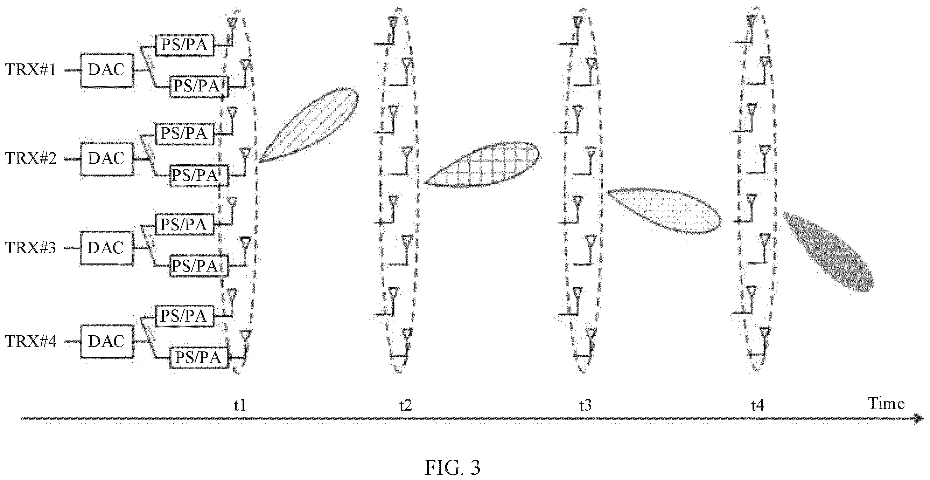

Usually, a millimeter-wave base station has four or eight digital paths, and each digital path is associated with many analog paths/antenna elements. Four digital paths (TRX#1, TRX#2, TRX#3, and TRX#4) in FIG. 3 are used as an example. In the figure, DAC represents an analog-to-digital conversion module and a digital-to-analog conversion module, PS represents a phase shifter (phase shifter), and PA represents a power amplifier (power amplifier). If the four digital paths are associated with a total of 2048 elements, and every two elements are associated with one analog path, there are 1024 analog paths, and each digital path is associated with 256 analog paths. In an existing time division multiplexing transmission solution, the base station sends one SSB beam, and all four digital paths and 1024 analog paths participate in beamforming. Four different SSB beams that need to be sent by the base station are sent at four time domain positions (11, t2, t3, and t4) in a time division manner.

To resolve the foregoing contradiction, a bandwidth of the SSB may be increased, to increase a transmit power of the SSB (in other words, reduce an equivalent transmission bit rate of the SSB), and improve SSB coverage. A corresponding SSB may also be referred to as a broadband SSB. In this way, a quantity of SSB beams that need to be sent in time domain can be reduced, and time domain overheads of the SSB can be reduced. For example, the SSB currently occupies 20 RBs in frequency domain, approximately 30 MHz. If a frequency domain width of the SSB is increased by four times, coverage of a single SSB is increased by approximately 6 dB. Correspondingly, a beamforming gain requirement of the SSB may be reduced by 6 dB. In other words, a beam width of the SSB may be increased by four times, the quantity of SSB beams may be reduced to 1/4 of an original quantity, symbol overheads are reduced from 15% to 3.8%, and slot overheads are reduced from 25% to 6.3%. Although the broadband SSB can be used to reduce time domain resource overheads of the SSB while it is ensured that coverage basically remains unchanged, in this solution, a beam width of the SSB is widened, beam resolution of the SSB is reduced, and a PRACH congestion probability is further increased.

As described above, there is an association relationship between PRACH transmission and an SSB. If the SSB beam is widened and a quantity of SSB beams is reduced, in a possible implementation, a beam used by the base station to receive the PRACH is also widened, and a PRACH transmission bandwidth or transmission duration is increased to improve coverage. For UE at an edge of the cell, a power is usually limited. In this case, the power cannot be increased by increasing the bandwidth. Therefore, PRACH coverage cannot be improved, and an access success rate of the UE decreases. If PRACH transmission duration is increased, more resources need to be occupied when the UE transmits the PRACH. Consequently, not only power consumption of the UE is increased, but also more importantly, the PRACH transmission congestion probability is increased, and the access success rate of the UE is also reduced.

In this application, based on a broadband SSB transmission solution, another possible embodiment is provided. An SSB transmission method in which space division multiplexing (space division multiplexing, SDM) is performed is introduced, that is, a plurality of SSB beams are simultaneously sent on a same time-frequency resource, so that time domain overheads of the SSB are reduced without reducing resolution of the SSB beam, to further reduce power consumption of the base station.

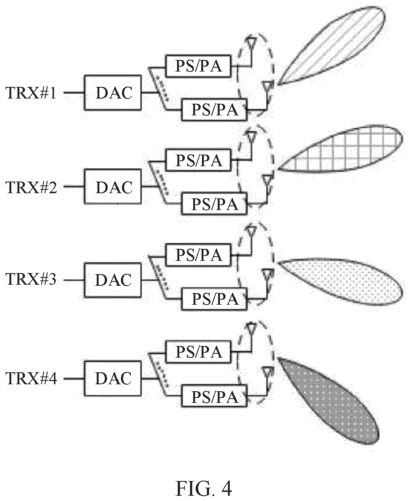

A core of this embodiment is to enable SDM transmission of the SSB. To implement this embodiment, in a possible implementation architecture, the base station supports a plurality of digital paths, each digital path forms one SSB beam by using an analog path and an element that are associated with the digital path, and the plurality of digital paths may form a plurality of SSB beams. FIG. 4 is a diagram of a possible base station implementation architecture according to an embodiment of this application. In the figure, an example in which four digital paths form four beams is used.

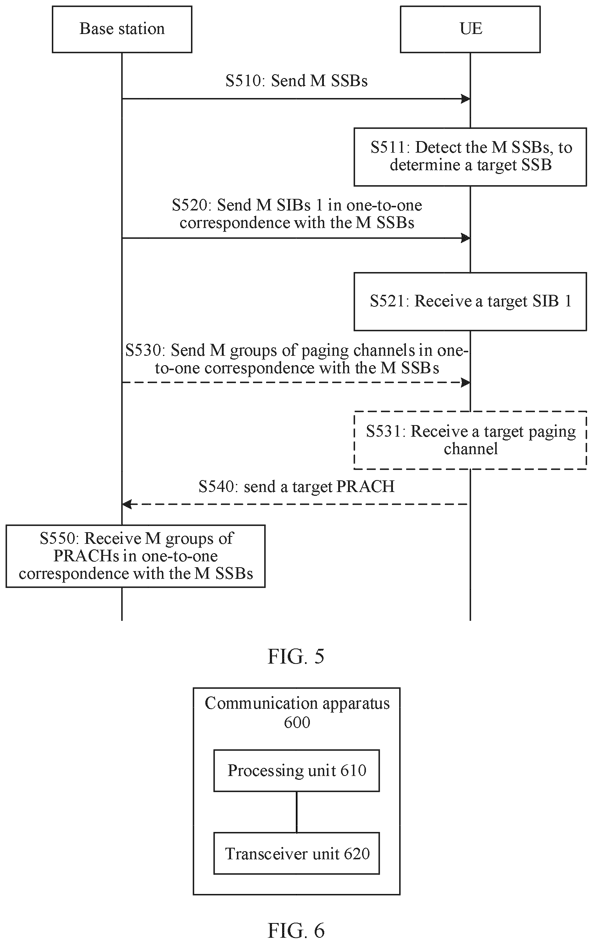

FIG. 5 is a schematic flowchart of an initial access method according to an embodiment of this application.

S510: A base station sends M first common channels, where M is an integer greater than 1.

The first common channel is a synchronization signal, or the first common channels include a synchronization signal and a physical broadcast channel. The synchronization signal may carry a physical cell identifier, the physical broadcast channel may carry partial minimum system information (minimum system information, MSI) of a cell, and the partial MSI indicates a transmission configuration of remaining minimum system information (remaining minimum system information, RMSI) of the cell. The cell is a cell managed by the base station. The transmission configuration that is of the RMSI and that is indicated by the partial MSI may be a transmission configuration of DCI for scheduling the RMSI. For example, the partial MSI indicates a time-frequency resource of the DCI for scheduling the RMSI. The partial MSI carried on the broadcast channel may also be referred to as a MIB, and the RMSI may also be referred to as a SIB 1.

Generally, the following provides descriptions by using an example in which the first common channel is an SSB.

Optionally, the base station sends M SSBs through M different beams, where the M beams are in one-to-one correspondence with the M SSBs, that is, the base station sends different SSBs in the M SSBs through different beams in the M beams. First information in the SSB indicates a first index, and different SSBs in the M SSBs indicate different values of the first index. M first indexes are in one-to-one correspondence with the M beams. In other words, different values of the first index in the M first indexes indicate different beams in the M beams. The M SSBs are sent on one SSB occasion, the SSB occasion is one of N SSB occasions, and the N SSB occasions correspond to N time-frequency positions that do not overlap at all, for example, N time-domain positions that do not overlap at all. Herein, N is an integer greater than 1.

Optionally, one SSB occasion corresponds to one time-frequency position for sending the SSB, and time-frequency resources of the M SSBs sent on one SSB occasion are completely the same. Alternatively, time-frequency resources of the M SSBs sent on one SSB occasion partially overlap. For example, time domain positions of the M SSBs are the same, and frequency domain positions partially overlap.

Optionally, the base station sends the SSB based on a predefined SSB pattern. The predefined SSB pattern may include the time-frequency positions of the N SSB occasions in the pattern and a quantity M of SSBs sent on each SSB occasion. The time-frequency positions of the N SSB occasions may be relative positions relative to a predefined SSB occasion, for example, relative positions relative to an SSB occasion #0 with a smallest SSB occasion index value in the N SSB occasions. The SSB pattern may be predefined in a protocol.

N x M SSBs in the N SSB occasions included in the SSB pattern may be numbered together. Numbers of the N SSB occasions are #0 to #(N-1). In this case, numbers of M SSBs on an SSB occasion #n are #M x n to #(M x n+M-1). In other words, a value range of the first index is M x n to (M x n+M-1). In this case, the first index may also be referred to as an SSB index.

The N x M SSBs in the N SSB occasions included in the SSB pattern may alternatively be numbered at two levels. The first index is numbers of M SSBs on an SSB occasion, and a value range is 0 to (M-1). A second index is a number of a specific SSB occasion on the N SSB occasions, and a value range is 0 to (N-1). The first index herein may also be referred to as a beam index, the second index may also be referred to as an SSB occasion index, and a combination of the first index and the second index may be referred to as an SSB index.

Optionally, the base station sends corresponding M SSBs on one SSB occasion on at least M digital paths. In other words, at least one digital path is responsible for digital signal processing of one SSB. Different SSBs are processed on different digital paths. Alternatively, different SSBs are associated with a same digital path, but different mapping matrices are used. In a possible implementation, the base station uses M digital paths, an analog path and an element that are associated with each digital path form one SSB beam, and each beam is used to send one SSB.

Optionally, a frequency domain resource of one first common channel is 20 x M RBs.

S511: UE detects the M SSBs, to determine a target SSB.

The UE detects the SSB on the N SSB occasions. Specifically, the UE detects M SSBs on each SSB occasion. Optionally, for a potential SSB occasion, the UE detects or decodes an SSB, to determine a first index corresponding to the detected SSB, so as to learn of a specific beam corresponding to the SSB.

The UE may determine a value of the first index based on first information of the target SSB. The first information may be one of the following four cases.

(1) The first information may be information related to a demodulation reference signal (demodulation reference signal, DMRS) of a PBCH. Specifically, the first information may be a sequence index of the DMRS or an initialization identifier value of a DMRS sequence. In other words, different first indexes correspond to different DMRS sequences or correspond to different initialization identifier values of the DMRS sequence. Alternatively, the first information is a resource element (resource element, RE) position index of the DMRS or an index of an orthogonal cover code (orthogonal cover code, OCC) of the DMRS. In other words, different first indexes correspond to different RE position indexes of the DMRS or correspond to different OCC indexes of the DMRS. In this application, the DMRS of the PBCH may also be referred to as a DMRS of the SSB.
In this case, the UE needs to perform at least M times of DMRS blind detection on each SSB occasion, and the M times of DMRS blind detection correspond to M values of the first information. For example, DMRS detection is performed by using M sequences, at M RE positions, or by using M OCCs.

(2) The first information may be a field A on a PBCH. Specifically, the field A may be an index field. The index field may indicate the target SSB in the M SSBs.

The index field may be decoupled from the SSB occasion index field, and is an independent field. For example, the field has $\lceil log_2^M \rceil$ bits, and indicates one of M SSBs on one SSB occasion, for example, indicates the target SSB. It may also be understood that the index field indicates one of transmit beams of the M SSB, for example, indicates a target transmit beam. The index field may also be referred to as a beam index field. In this application, a symbol ⌈ ⌉ represents rounding up.

Alternatively, the index field may indicate both the SSB occasion index and a beam index on an SSB occasion. In other words, the index field indicates the SSB index. For example, the index field has $\lceil log_2^{M*N} \rceil$ bits.

Alternatively, the field A on the PBCH indicates the beam index, and a field B on the PBCH indicates the SSB occasion index.

(3) The first information may be a parameter in a PBCH channel coding, modulation, or scrambling processing process. Specifically, the first information may be a coding parameter of the PBCH, for example, an index of a disturbance matrix. Alternatively, the first information may be a modulation parameter of the PBCH, for example, a modulation order or a constellation rotation angle. Alternatively, the first information may be a scrambling parameter of the PBCH, for example, a scrambling sequence index of the PBCH or an initialization value of a scrambling sequence of the PBCH.

In this case, the UE needs to perform at least M times of PBCH receiving on each SSB occasion, and the M times of PBCH receiving correspond to the M values of the first information. For example, PBCH receiving is performed by using M disturbance matrices, M modulation orders or rotation angles, and M scrambling code sequences.

(4) The first information is a combination of at least two of the foregoing three types of information. For example, the first information is a combination of (1) and (2). When values of "information related to the DMRS of the PBCH" are different and values of the field A on the PBCH are different, the first information may correspond to different values of the first index. When the value of the first index is jointly determined by using both the DMRS of the PBCH and the field on the PBCH, the UE may improve detection performance by using a multi-user detection technology.

Specifically, when blindly detecting the SSB on the SSB occasion, the UE may not need to blindly detect a value of the SSB index. For example, the field A on the PBCH indicates the SSB index; or the field A indicates the beam index, and a field B indicates the SSB occasion index. Alternatively, the UE may need to perform only M times of blind detection. For example, the value of the SSB occasion index is indicated by using a field B on the PBCH, and different SSBs on one SSB occasion are implicitly indicated by using the DMRS sequence. Alternatively, the UE may need to perform blind detection for less than M times. For example, some values of the beam index are indicated by using a field C on the PBCH, the other values are implicitly indicated by using the DMRS sequence. A value of the SSB occasion index is indicated by using a field B on the PBCH. Alternatively, the UE may need to perform blind detection for more than M times. For example, some values of the SSB occasion index are indicated by using a field D on the PBCH, and the other values of the SSB occasion index and the beam index are jointly implicitly indicated by using the DMRS sequence.

The target SSB may be a first SSB successfully detected by the UE; or may be an SSB that has a largest received signal power and that is detected by the UE; or may be any SSB that is successfully detected by the UE and whose received power is greater than a preset threshold. After the UE detects a target SSB on one SSB occasion, the SSB occasion is marked as a target SSB occasion, a receive beam used by the UE to receive the target SSB is a target receive beam, a transmit beam used by the base station to send the target SSB is a target transmit beam, and a first index indicated by the target SSB is referred to as a target first index.

S520: The base station sends M second common channels in one-to-one correspondence with the M SSBs.

A beam used to send the M second common channels is the same as a beam used to send the M first common channels. Specifically, a beam used to send an $m^{th}$ second common channel in the M second common channels is the same as a beam used to send an $m^{th}$ first common channel in the M first common channels. Herein, m is a positive integer less than or equal to M. Optionally, content sent on the M second common channels herein is the same. In other words, content sent on an $m1^{th}$ second common channel and content sent on an $m2^{th}$ second common channel are completely the same. Herein, m1 and m2 are positive integers less than or equal to M, and m1 is not equal to m2.

The second common channel is used to carry system information other than system information carried on the first common channel, and the system information and the system information carried on the first common channel form basic system information of the cell. For example, the second common channel carries the RMSI described in S510. The second common channel may be a PDCCH for scheduling the SIB 1, or may be a PDSCH that carries the SIB 1, or may further include a PDSCH that carries the SIB 1 and a PDCCH for scheduling the PDSCH.

When the first common channel is a synchronization signal, the second common channel may include the PBCH and the PDSCH that carries the SIB 1, or may include the PBCH, the PDSCH that carries the SIB 1, and the PDCCH for scheduling the PDSCH.

For ease of description, the SIB 1 is used to replace the second common channel for description below.

S521: The UE receives a target SIB 1 corresponding to the target SSB. A beam used to receive the target SIB 1 is the same as a beam used to receive the target SSB.

The base station may configure a plurality of SIB 1 sending positions for the SIB 1, and the SIB 1 sending position may also be referred to as a SIB 1 occasion. The SIB 1 occasion may be a monitoring occasion (monitoring occasion) of the PDCCH for scheduling the SIB 1, and the PDCCH monitoring occasion may also be referred to as a PDCCH sending position. Alternatively, the SIB 1 occasion may be a sending position of a PDSCH that carries the SIB 1.

Optionally, one SSB occasion corresponds to one SIB 1 occasion, each SIB 1 occasion corresponds to one specific time-frequency resource, M SIBs 1 are transmitted on the time-frequency resource, and used transmit beams respectively correspond to transmit beams of the M SSBs. Alternatively, one SSB occasion corresponds to M SIB 1 occasions. In other words, all SIBs 1 correspond to different time-frequency resources. In addition, the M SIB 1 occasions are in one-to-one correspondence with the M beams used to send the M SSBs. In other words, the M SIBs 1 also have different transmit beams. In this application, that time-frequency resources are different may be that time domain resources are different but frequency domain resources are the same, or frequency domain resources are different but time domain resources are the same, or both time domain resources and frequency domain resources are different.

Scenario in which the SIB 1 is scheduled based on the DCI:

In one case, the N SSB occasions are in one-to-one correspondence with the N PDCCH sending positions, and the N PDCCH sending positions do not overlap. The N PDCCH sending positions herein are the plurality of PDCCH sending positions configured by the base station for the SIB 1. At each PDCCH sending position, the base station sends a same PDCCH through M transmit beams. The M transmit beams are the same as transmit beams of M SSBs on a corresponding SSB occasion. Correspondingly, after the UE detects the target SSB on one SSB occasion, the UE detects the PDCCH at the PDCCH sending position corresponding to the SSB occasion through the target receive beam. If the PDCCH is detected, the PDSCH that carries the SIB 1 is further received through the target receive beam on the indicated time-frequency resource based on an indication of the PDCCH.

In another case, the N x M SSBs are in one-to-one correspondence with N x M PDCCH sending positions, and the N x M sending positions do not overlap. The N x M PDCCH sending positions herein are the plurality of PDCCH sending positions configured by the base station for the SIB 1. At each PDCCH sending position, the base station sends the PDCCH through the target transmit beam. Correspondingly, after detecting the target SSB, the UE detects the PDCCH through the target receive beam. If the PDCCH is detected, the PDSCH that carries the SIB 1 is further received through the target receive beam on the indicated time-frequency resource based on an indication of the PDCCH.

Scenario in which the SIB 1 is not scheduled based on DCI, in other words, the SIB 1 is directly broadcast:

The base station may send the SIB 1 on N SIB 1 occasions, and the N SIB 1 occasions are in one-to-one correspondence with the N SSB occasions. Each SIB 1 occasion corresponds to one time-frequency position, M times of SIBs 1 are sent at each time-frequency position, and content in the M times of SIBs 1 is the same. After detecting the target SSB, the UE detects the SIB 1 through the target receive beam on the SIB 1 occasion corresponding to the target SSB occasion.

Alternatively, the base station may send the SIB 1 on the N x M SIB 1 occasions, and the N x M SIB 1 occasions are in one-to-one correspondence with the N x M SSBs. Each SIB 1 occasion corresponds to one time-frequency position, and one SIB 1 is sent at each time-frequency position. After detecting the target SSB, the UE detects the SIB 1 through the target receive beam on the SIB 1 occasion corresponding to the target SSB.

S530: Optionally, the base station sends M groups of paging channels in one-to-one correspondence with the M SSBs.

The paging channel in this application may be a PDCCH for scheduling a paging message, or may be a PDSCH that carries a paging message, or may include a PDCCH for scheduling a paging message and a PDSCH that carries the paging message.

It may be understood that the base station determines, based on whether there is data to be sent to the UE, whether to send the paging channel to the UE. Therefore, the base station selects, for sending, one or more paging channels from each of the M groups of paging channels based on a requirement. In other words, the base station sends a maximum of S paging channels in each group of paging channels. Time-frequency resources of $s^{th}$ paging channels in all groups of paging channels may be the same. Herein, S is a positive integer, and s is a positive integer less than or equal to S. A transmit beam used by the base station to transmit an $m^{th}$ paging channel in the M groups of paging channels is the same as a transmit beam used to transmit an $m^{th}$ SSB in the M SSBs. Herein, m is a positive integer less than or equal to M. Because the base station does not learn of a specific position of the UE in the cell, the base station needs to traverse and use the M beams to send the paging channel to specific UE. Therefore, paging messages sent on different groups in the M groups of paging channels are the same. In other words, paging messages sent on an $m1^{th}$ group of paging channels and an $m2^{th}$ group of paging channels are the same. Different paging channels in a group of paging channels may correspond to different UEs or UE groups.

S531: Optionally, the UE receives a target paging channel through the target receive beam.

The M SSBs are in one-to-one correspondence with the M groups of paging channels. A group of paging channels corresponding to the target SSB includes the target paging channel sent to the UE. Herein, each of the M groups of paging channels includes S paging channels, and the time-frequency resources of the $s^{th}$ paging channels in all groups of paging channels may be the same. Herein, S is a positive integer, and s is a positive integer less than or equal to S. For example, a time-frequency resource of an $s^{th}$ paging channel in the $m1^{th}$ group is the same as a time-frequency resource of an $s^{th}$ paging channel in the $m2^{th}$ group. Herein, m1 and m2 are positive integers less than or equal to M, and m1 is not equal to m2. The M groups of paging channels are transmitted in a space division manner, so that time-frequency resources occupied by the paging channel can be reduced, to improve transmission efficiency of the paging channel. In this application, when a group of channels includes only one channel, the group of channels may also be briefly referred to as one channel.

The M groups of paging channels may also be transmitted in a time division manner or a frequency division manner. In other words, time-frequency resources of $s^{th}$ paging channels in all groups of paging channels are different. For example, the time-frequency resource of the $s^{th}$ paging channel in the $m1^{th}$ group is different from the time-frequency resource of the $s^{th}$ paging channel in the $m2^{th}$ group.

After detecting the target SSB, the UE receives the target paging channel through the target receive beam on the group of paging channels corresponding to the target SSB.

S540: Optionally, the UE sends the target PRACH, where a beam used by the UE to send the target PRACH is the same as a beam used by the UE to receive the target SSB.

S550: The base station receives M groups of PRACHs in one-to-one correspondence with the M SSBs.

A beam used by the base station to receive the M groups of PRACHs is the same as a beam used by the base station to send the M SSBs. Specifically, a beam used by the base station to receive an $m^{th}$ PRACH group in the M groups of PRACHs is the same as a beam used by the base station to send an $m^{th}$ SSB in the M SSBs. Herein, m is a positive integer less than or equal to M. The group of PRACHs corresponding to the target SSB includes the target PRACH sent by the UE to the base station. Each of the M groups of PRACHs includes L PRACHs. Herein, L is a positive integer. One PRACH may be defined as one PRACH preamble on one time-frequency resource. PRACHs on different time-frequency resources or different preambles on a same time-frequency resource may correspond to different PRACHs. When L is equal to 1, a group of PRACHs may be briefly referred to as one PRACH. Time-frequency resources of $k^{th}$ PRACHs in all of the M groups of PRACHs may be the same. Herein, k is a positive integer less than or equal to L. For example, a time-frequency resource of a $k^{th}$ PRACH in the $m1^{th}$ group is the same as a time-frequency resource of a $k^{th}$ PRACH in the $m2^{th}$ group. Herein, m1 and m2 are positive integers less than or equal to M, and m1 is not equal to m2. The M groups of PRACHs are transmitted in a space division manner, so that time-frequency resources occupied by the PRACH can be reduced, to improve transmission efficiency of the PRACH.

The M groups of PRACHs may also be transmitted in a time division manner, a frequency division manner, or a code division manner. In other words, time-frequency resources of $s^{th}$ PRACHs in all groups of PRACHs are different, or used PRACH preambles are different, or used scrambling codes are different. For example, the time-frequency resource of the $s^{th}$ PRACH in the $m1^{th}$ group is different from the time-frequency resource of the $s^{th}$ PRACH in the $m2^{th}$ group.

The UE determines the target PRACH from the group of PRACHs corresponding to the target SSB, and then sends the target PRACH through a beam that is the same as the beam used to receive the target SSB. Because the base station cannot learn in advance of whether the UE sends a PRACH and a specific PRACH to be sent, the base station needs to detect all possible PRACHs, in other words, receive the M groups of PRACHs corresponding to the M SSBs. That the base station receives the PRACH herein may also be referred to as that the base station detects the PRACH, to determine whether the UE sends the PRACH on a corresponding time-frequency resource.

Further, the base station may send a RAR through a beam the same as that the beam when the target PRACH is received, and the UE may receive the RAR through a beam the same as the beam used when the target SSB is received, to improve transmission performance of the RAR. Alternatively, the UE may send Msg3 through a beam the same as the beam used when the target SSB is received, and the base station may receive Msg3 through a beam the same as the beam used when the target PRACH is received, to improve transmission performance of Msg3. The base station may further send Msg4 through a beam the same as the beam used when the target PRACH is received, and the UE may further receive Msg4 through a beam the same as the beam used when the target SSB is received, to improve transmission performance of Msg4.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

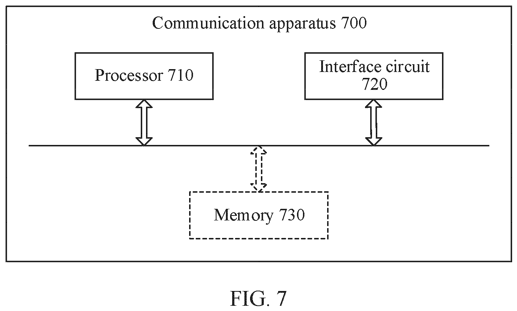

FIG. 6 and FIG. 7 each are a diagram of a structure of a possible communication apparatus according to an embodiment of this application. The communication apparatuses may be configured to implement the functions of the UE or the base station in the method embodiments. Therefore, beneficial effects of the method embodiments can also be achieved. In this embodiment of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 6, a communication apparatus 600 includes a processing unit 610 and a transceiver unit 620. The communication apparatus 600 is configured to implement functions of the UE or the base station in the method embodiment shown in FIG. 5.

When the communication apparatus 600 is configured to implement the function of the UE in the method embodiment shown in FIG. 5, the transceiver unit 620 may be configured to detect M first common channels, may be further configured to receive a target second common channel corresponding to a target first common channel based on a target spatial filtering parameter, and may be configured to send a target PRACH based on the target spatial filtering parameter; and the processing unit 610 is configured to determine the detected target first common channel.

When the communication apparatus 600 is configured to implement the function of the base station in the method embodiment shown in FIG. 5, the transceiver unit 620 is configured to send M first common channels, is configured to send M second common channels in one-to-one correspondence with the M first common channels, and is configured to receive M groups of PRACHs in one-to-one correspondence with the M first common channels.

For more detailed descriptions of the processing unit 610 and the transceiver unit 620, refer to related descriptions in the method embodiment shown in FIG. 5.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to: store instructions executed by the processor 710, or store input data required by the processor 710 to run the instructions, or store data generated after the processor 710 runs the instructions.

When the communication apparatus 700 is configured to implement the method shown in FIG. 5, the processor 710 is configured to implement a function of the processing unit 610, and the interface circuit 720 is configured to implement a function of the transceiver unit 620.

When the communication apparatus is a chip applied to a terminal, the chip in the terminal implements functions of the terminal in the method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the module in the base station implements a function of the base station in the method embodiments. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any conventional processor, or the like.

The method steps in embodiments of this application may be implemented in hardware, or may be implemented in software instructions that may be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from one computer-readable storage medium to another computer-readable storage medium. For example, the computer programs or instructions may be transmitted from one website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1. An initial access method, performed by a terminal or a module in the terminal, and comprising:

    detecting M first common channels, and determining a detected target first common channel, wherein the first common channels comprise a synchronization signal and a physical broadcast channel, the physical broadcast channel carries partial minimum system information MSI of a cell, the partial MSI indicates a transmission configuration of remaining minimum system information RMSI of the cell, and time-frequency resources of the M first common channels are completely the same, wherein M is an integer greater than 1;
    receiving a target second common channel corresponding to the target first common channel based on a target spatial filtering parameter, wherein the target second common channel carries the RMSI, and the target spatial filtering parameter is a spatial filtering parameter used when the target first common channel is received; and
    sending a target physical random access channel PRACH based on the target spatial filtering parameter.

2. The method according to claim 1, wherein the method further comprises:
determining a target first index corresponding to the target first common channel based on first information of the target first common channel, wherein values of first indexes indicated by different first common channels in the M first common channels are different.

3. The method according to claim 1 or 2, wherein the first information is at least one of the following:

    information related to a demodulation reference signal DMRS of the first common channel;
    an index field on the first common channel; and
    a parameter in a channel coding, modulation, or scrambling processing process of the first common channel.

4. The method according to claim 3, wherein the information related to the DMRS is one of the following: a sequence index of the DMRS, an initialization identifier value of a DMRS sequence, an index of a resource element position of the DMRS, or an index of an orthogonal cover code of the DMRS.

5. The method according to claim 3 or 4, wherein the index field indicates the target first common channel in the M first common channels.

6. The method according to any one of claims 1 to 5, wherein the M first common channels are in one-to-one correspondence with M second common channels, the M second common channels comprise the target second common channel, and time-frequency resources of the M second common channels are the same.

7. The method according to any one of claims 1 to 6, wherein the M first common channels are in one-to-one correspondence with M groups of PRACHs, a group of PRACHs corresponding to the target first common channel comprises the target PRACH, each of the M groups of PRACHs comprises L PRACHs, and time-frequency resources of $k^{th}$ PRACHs in all of the M groups of PRACHs are the same, wherein L is a positive integer, and k is a positive integer less than or equal to L.

8. The method according to any one of claims 1 to 7, wherein the method further comprises:
receiving a target paging channel based on the target spatial filtering parameter.

9. The method according to claim 8, wherein the M first common channels are in one-to-one correspondence with M groups of paging channels, a group of paging channels corresponding to the target first common channel comprises the target paging channel, each of the M groups of paging channels comprises S paging channels, and time-frequency resources of $s^{th}$ paging channels in all of the M groups of paging channels are the same, wherein S is a positive integer, and s is a positive integer less than or equal to S.

10. An initial access method, performed by a network device or a module in the network device, and comprising:

sending M first common channels, wherein the first common channels comprise a synchronization signal and a physical broadcast channel, the physical broadcast channel carries partial minimum system information MSI of a cell, the partial MSI indicates a transmission configuration of remaining minimum system information RMSI of the cell, and time-frequency resources of the M first common channels are completely the same, wherein M is an integer greater than 1; sending M second common channels in one-to-one correspondence with the M first common channels, wherein a spatial filtering parameter used to send the M second common channels is the same as a spatial filtering parameter used to send the M first common channels; and receiving M groups of physical random access channels PRACHs in one-to-one correspondence with the M first common channels, wherein a spatial filtering parameter used to receive an $m^{th}$ group of PRACHs in the M groups of PRACHs is the same as a spatial filtering parameter used to send an $m^{th}$ first common channel in the M first common channels, wherein m is a positive integer less than or equal to M.

11. The method according to claim 10, wherein first information of the first common channel indicates a first index, and values of first indexes indicated by different first common channels in the M first common channels are different.

12. The method according to claim 10 or 11, wherein the first information is at least one of the following:

information related to a demodulation reference signal DMRS of the first common channel; an index field on the first common channel; and a parameter in a channel coding, modulation, or scrambling processing process of the first common channel.

13. The method according to claim 12, wherein the information related to the DMRS is one of the following: a sequence index of the DMRS, an initialization identifier value of a DMRS sequence, an index of a resource element position of the DMRS, or an index of an orthogonal cover code of the DMRS.

14. The method according to claim 12 or 13, wherein the index field indicates a target first common channel in the M first common channels.

15. The method according to any one of claims 10 to 14, wherein time-frequency resources of the M second common channels are the same.

16. The method according to any one of claims 10 to 15, wherein each of the M groups of PRACHs comprises L PRACHs, and time-frequency resources of $k^{th}$ PRACHs in all of the M groups of PRACHs are the same, wherein L is a positive integer, and k is a positive integer less than or equal to L.

17. The method according to any one of claims 10 to 16, wherein the method further comprises:
sending M groups of paging channels in one-to-one correspondence with the M first common channels, wherein a spatial filtering parameter used to send an $m^{th}$ group of paging channels in the M groups of paging channels is the same as the spatial filtering parameter used to send the $m^{th}$ first common channel in the M first common channels, wherein m is a positive integer less than or equal to M.

18. The method according to any one of claims 10 to 17, wherein each of the M groups of paging channels comprises a maximum of S paging channels, and time-frequency resources of $s^{th}$ paging channels in all of the M groups of paging channels are the same, wherein S is a positive integer, and s is a positive integer less than or equal to S.

19. A communication apparatus, comprising a processor, wherein the processor is configured to perform the method according to any one of claims 1 to 9 or the method according to any one of claims 10 to 18.

20. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 9 or the method according to any one of claims 10 to 18 by using a logic circuit or by executing code instructions.

21. A computer-readable storage medium, storing computer instructions, wherein when the computer instructions are executed by a communication apparatus, the communication apparatus is enabled to perform the method according to any one of claims 1 to 9 or the method according to any one of claims 10 to 18.

FIG. 1

EP 4 429 157 A1

FIG. 2

FIG. 3

FIG. 4

```
┌─────────────────┐                              ┌─────────────────┐
│  Base station   │                              │       UE        │
└────────┬────────┘                              └────────┬────────┘
         │                                                │
         │          S510: Send M SSBs                     │
         │───────────────────────────────────────────────>│
         │                                                │
         │                            ┌───────────────────┴───────────────┐
         │                            │ S511: Detect the M SSBs, to        │
         │                            │ determine a target SSB             │
         │                            └───────────────────┬───────────────┘
         │     S520: Send M SIBs 1 in one-to-one          │
         │       correspondence with the M SSBs           │
         │───────────────────────────────────────────────>│
         │                                                │
         │                            ┌───────────────────┴───────────────┐
         │                            │ S521: Receive a target SIB 1       │
         │                            └───────────────────┬───────────────┘
         │                                                │
         │ S530: Send M groups of paging channels in one- │
         │    to-one correspondence with the M SSBs       │
         │- - - - - - - - - - - - - - - - - - - - - - - - >│
         │                                                │
         │                            ┌ ─ ─ ─ ─ ─ ─ ─ ─ ─ ┴ ─ ─ ─ ─ ─ ─ ┐
         │                              S531: Receive a target paging
         │                            │            channel              │
         │                            └ ─ ─ ─ ─ ─ ─ ─ ─ ─ ┬ ─ ─ ─ ─ ─ ─ ┘
         │           S540: send a target PRACH            │
         │<- - - - - - - - - - - - - - - - - - - - - - - -│
         │                                                │
┌────────┴────────────────────────┐                       │
│ S550: Receive M groups of        │                       │
│ PRACHs in one-to-one             │                       │
│ correspondence with the M SSBs   │                       │
└────────┬────────────────────────┘                       │
         │                                                │
```

FIG. 5

```
┌─────────────────────────────────────┐
│  Communication apparatus             │
│              600                     │
│   ┌─────────────────────────────┐    │
│   │  Processing unit 610         │    │
│   └──────────────┬──────────────┘    │
│                  │                   │
│   ┌──────────────┴──────────────┐    │
│   │  Transceiver unit 620        │    │
│   └─────────────────────────────┘    │
└─────────────────────────────────────┘
```

FIG. 6

Communication apparatus 700

Processor 710

Interface circuit 720

Memory 730

FIG. 7

## INTERNATIONAL SEARCH REPORT

| | International application No. |
|---|---|
| | **PCT/CN2022/132948** |

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNPAT, CNKI, WPI, EPDOC, 3GPP: 公共信道, 物理广播信道, 最小系统信息, 时域, 频域, 时频, 空域滤波参数, 波束, 时隙, 时机, 空分, 共址, SSB, PRACH, RMSI, BEAM, SLOT, OCCASION, QUASI-COLOCATED, QCLED

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021329577 A1 (FUJITSU LIMITED) 21 October 2021 (2021-10-21) description, paragraph 117, 183-paragraph 199, paragraph 216, and paragraph 226 | 1-21 |
| X | WO 2021226371 A1 (QUALCOMM INC.) 11 November 2021 (2021-11-11) description, paragraphs 59-64 | 1-21 |
| A | CN 106961713 A (ZTE CORP.) 18 July 2017 (2017-07-18) entire document | 1-21 |
| A | CN 105792360 A (ZTE CORP.) 20 July 2016 (2016-07-20) entire document | 1-21 |
| X | ZTE et al. "Discussion on enhancement of initial access procedures for NR-U" *3GPP TSG RAN WG1 Meeting #97 R1-1905952*, 17 May 2019 (2019-05-17), page 13, paragraph 5-page 14, paragraph 3 | 1-21 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 February 2023** | **08 February 2023** |

| Name and mailing address of the ISA/CN | Authorized officer |
|---|---|
| China National Intellectual Property Administration (ISA/ CN) China No. 6, Xitucheng Road, Jimenqiao, Haidian District, Beijing 100088 | |
| Facsimile No. **(86-10)62019451** | Telephone No. |

Form PCT/ISA/210 (second sheet) (July 2022)

<table>
<tr><td colspan="6" align="center"><b>INTERNATIONAL SEARCH REPORT</b><br><b>Information on patent family members</b></td><td colspan="2">International application No.<br><b>PCT/CN2022/132948</b></td></tr>
</table>

| Patent document cited in search report | | | Publication date (day/month/year) | Patent family member(s) | | | Publication date (day/month/year) |
|---|---|---|---|---|---|---|---|
| US | 2021329577 | A1 | 21 October 2021 | WO | 2020143060 | A1 | 16 July 2020 |
| | | | | KR | 20210095699 | A | 02 August 2021 |
| | | | | EP | 3911044 | A1 | 17 November 2021 |
| | | | | JP | 2022517922 | A | 11 March 2022 |
| WO | 2021226371 | A1 | 11 November 2021 | IL | 274510 | A | 01 December 2021 |
| CN | 106961713 | A | 18 July 2017 | WO | 2017121109 | A1 | 20 July 2017 |
| | | | | US | 2019021076 | A1 | 17 January 2019 |
| | | | | US | 10492198 | B2 | 26 November 2019 |
| CN | 105792360 | A | 20 July 2016 | | None | | |

Form PCT/ISA/210 (patent family annex) (July 2022)

**EP 4 429 157 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111393305X